# EUROPÄISCHE PATENTSCHRIFT

(11) **EP 4 232 641 B1**
(45) Veröffentlichungstag und Bekanntmachung des Hinweises auf die Patenterteilung: **06.11.2024**
(21) Anmeldenummer: 21769895.0
(22) Anmeldetag: 17.08.2021
(51) Int. Cl.: E03C 1/086, F16L 37/084, F16L 37/48

(54) **WASSERAUSLAUF**
WATER OUTLET
SORTIE D'EAU

(30) Priorität: 20.10.2020 DE 202020105991 U
(43) Veröffentlichungstag der Anmeldung: 30.08.2023
(73) Patentinhaber: Neoperl GmbH, 79379 Müllheim (DE)
(72) Erfinder: STÄDTLER, Georg, 79379 Müllheim (DE); HOROBA, Sascha, 79288 Gottenheim (DE); BIRMELIN, David, 79379 Müllheim (DE)
(74) Vertreter: Mertzlufft-Paufler, Cornelius
(86) Internationale Anmeldenummer: PCT/EP2021/072803
(87) Internationale Veröffentlichungsnummer: WO 2022/083917

(56) Entgegenhaltungen:
- CN-U- 203 769 006
- DE-U1- 8 513 518
- US-A- 4 682 798
- US-A1- 2006 283 336
- US-A1- 2008 007 044

## Beschreibung

Die Erfindung betrifft einen Wasserauslauf, insbesondere einen sanitären Wasserauslauf.

Es ist bereits bekannt, am Auslaufende einer sanitären Auslaufarmatur über eine Schraubverbindung ein hülsenförmiges Auslaufmundstück zu montieren, in welches Auslaufmundstück eine Einsetzpatrone einsetzbar ist. In dieser Einsetzpatrone ist regelmäßig ein belüfteter oder unbelüfteter Strahlregler angeordnet, der das am Auslaufende der Auslaufarmatur ausströmende Wasser zu einem aus voneinander separat auslaufenden Einzelstrahlen gebildeten Spraystrahl oder zu einem homogenen, nicht-spritzenden Gesamtstrahl zu formen hat. Dem Strahlregler ist in den vorbekannten Einsetzpatronen meist ein Vorsatzsieb vorgeschaltet, das die im anströmenden Wasser enthaltenen Kalkreste oder dergleichen Schmutzpartikel auszufiltern hat, bevor diese die feinen Strukturen im Strahlregler beeinträchtigen können. Man kennt auch bereits sanitäre Einsetzpatronen, bei denen zwischen dem Vorsatzsieb und dem Strahlregler ein Durchflussmengenregler oder Durchflussbegrenzer zwischengeschaltet ist, der die pro Zeiteinheit durchströmende Wassermenge zu begrenzen oder auf einen druckunabhängig festgelegten Maximalwert einzuregeln hat. Wasserausläufe nach dem relevanten Stand der Technik sind beispielsweise in den Schriften DE 85 13 518 U1, CN 203 769 006 U, US 4 682 798 A, US 2008/007044 A1 und US 2006/283336 A1 offenbart.

Solche vorbekannten Wasserausläufe, die über ein Schraubgewinde mit der Auslaufarmatur oder einen anderen zuströmseitigen Leitungsabschnitt verbunden sind, sind meist nur mit einem gewissen Aufwand montierbar und demontierbar. Sofern der Wasserauslauf und die darin befindliche Einsetzpatrone in Zeitabständen ausgetauscht oder ausgewechselt werden muss, ist ein geringerer Montage- und Demontageaufwand wünschenswert. So müssen beispielsweise die in einem Krankenhaus verwendeten Einsetzpatronen in regelmäßigen Zeitabständen aus hygienischen Gründen ausgewechselt werden. Auch kennt man bereits Beregnungsanlagen zur Pflanzenbewässerung, bei denen an einer Wasserleitung eine Mehrzahl von, in geringen Abständen zueinander angeordnete Wasserausläufe vorgesehen sind. Insbesondere in solchen Anwendungsfällen ist ein Wasserauslauf wünschenswert, der mit einem reduzierten Montage- und Demontageaufwand mit einem zuströmseitigen Leitungsabschnitt verbunden werden kann.

Es besteht daher die Aufgabe, einen Wasserauslauf der eingangs erwähnten Art zu schaffen, der einen deutlich reduzierten Montage- und Demontageaufwand erfordert.

Die erfindungsgemäße Lösung dieser Aufgabe besteht bei dem Wasserauslauf der eingangs erwähnten Art in den Merkmalen der geltenden Ansprüche 1 oder 6 oder 9.

Der erfindungsgemäße Wasserauslauf weist ein zulaufseitiges erstes Auslaufteil und ein ablaufseitiges zweites Auslaufteil auf, die zwischen einer Lösestellung und eine Gebrauchsstellung bewegbar sind. Dabei sind die Auslaufteile des erfindungsgemäßen Wasserauslaufs in ihrer Gebrauchsstellung in Durchströmrichtung miteinander verbunden und mittels einer gewindelosen Schnellkupplung aneinander lösbar fixierbar. Da das zulaufseitige erste Auslaufteil und das hülsenförmige ablaufseitige zweite Auslaufteil über eine gewindelose Schnellkupplung aneinander lösbar fixiert werden können, ist eine rasche Montage und Demontage dieser Auslaufteile möglich. Die rasche Montage und Demontage des erfindungsgemäßen Wasserauslaufs kann dazu benutzt werden, um in einem Hülseninnenraum des zulaufseitigen ersten Auslaufteiles und/oder des ablaufseitigen zweiten Auslaufteiles befindliche strahlformende und/oder strahlregulierende Elemente ein- oder auszubauen. Um ein Einsetzen oder ein Herausnehmen dieser strahlformenden und/oder strahlregulierenden Elemente aus dem Hülseninnenraum des zulaufseitigen ersten Auslaufteiles und/oder des ablaufseitigen zweiten Auslaufteiles noch zusätzlich zu erleichtern, kann es zweckmäßig sein, wenn diese strahlformenden und/oder strahlregulierenden Elemente in einer Einsetzpatrone gehalten sind, welche Einsetzpatrone in den Hülseninnenraum zumindest eines der Auslaufteile eingesetzt beziehungsweise eingeschraubt werden kann.

Bei dem erfindungsgemäßen Wasserauslauf kann es zweckmäßig sein, wenn in den Hülseninnenraum des ablaufseitigen zweiten Auslaufteiles eine Einsetzpatrone einsetzbar oder einschraubbar ist, die einen Strahlregler und/oder einen Durchflussmengenregler und/oder ein Vorsatzsieb aufweist. Während der in der Einsetzpatrone befindliche Strahlregler das durchströmende Wasser in einen aus einer Mehrzahl von separaten Einzelstrahlen austretenden Spraystrahl oder einen homogenen, nicht-spritzenden Gesamtstrahl zu formen hat, dient der Durchflussmengenregler dazu, die pro Zeiteinheit durchströmende Wassermenge zu begrenzen oder druckunabhängig auf einen festgelegten Maximalwert einzuregeln. Weist die im erfindungsgemäßen Wasserauslauf vorgesehene Einsetzpatrone zusätzlich oder stattdessen auch ein Vorsatzsieb auf, dient dieses Vorsatzsieb dazu, die im anströmenden Wasser eventuell enthaltenen Kalkreste und dergleichen Schmutzpartikel herauszufiltern, bevor diese Schmutzpartikel die Funktion des abströmseitig nachfolgenden Strahlreglers, Vorsatzsiebes und/oder Durchflussmengenreglers beeinträchtigen können.

Erfindungsgemäß ist Schnellkupplung zwischen dem zulaufseitigen ersten Auslaufteil und dem ablaufseitigen zweiten Auslaufteil außenseitig und axial beanstandet zu dem zweiten Auslaufteil an dem ersten Auslaufteil gehalten.

Da die Schnellkupplung zwischen den Auslaufteilen außenseitig an dem ersten Auslaufteil gehalten ist und axial beanstandet zu dem zweiten Auslaufteil am ersten Auslaufteil angeordnet ist, wird die Handhabung dieser Schnellkupplung und die rasche Montage und Demontage der über die Schnellkupplung miteinander verbindbaren Auslaufteile wesentlich vereinfacht.

Die den Strahlregler und/oder den Durchflussmengenregler und/oder das Vorsatzsieb tragende Einsetzpatrone ist in den Hülseninnenraum des zuströmseitigen ersten Auslaufteiles eingesetzt.

Eine solche Einsetzpatrone lässt sich jedoch wesentlich einfacher einsetzen und bei Bedarf auch wieder entfernen, wenn die Einsetzpatrone von der zuströmseitigen Stirnseite des ablaufseitigen zweiten Auslaufteiles aus in den Hülseninnenraum dieses zweiten Auslaufteiles einsetzbar ist. Da das zweite Auslaufteil vom ersten Auslaufteil in der Lösestellung getrennt ist, lässt sich die Einsetzpatrone aus der in Gebrauchsstellung beengten Einbausituation lösen, um anschließend die Einsetzpatrone aus dem Hülseninnenraum im zweiten Auslaufteil zu entfernen und auszuwechseln.

Dabei wird eine Ausführung bevorzugt, bei der die Einsetzpatrone in den Hülseninnenraum des abströmseitigen zweiten Auslaufteiles einsetzbar ist, bis diese Einsetzpatrone an einem am Hülseninnenumfang des zweiten Auslaufteiles vorgesehenen Einsetzanschlag anliegt. Dieser Einsetzanschlag begrenzt die Einsetzbewegung der Einsetzpatrone im zweiten Auslaufteil.

Eine konstruktiv besonders einfache Ausführung gemäß der Erfindung sieht vor, dass der Einsetzanschlag als ein am Hülseninnenumfang des zweiten Auslaufteiles umlaufender Ringabsatz ausgebildet ist. Ein solcher Einsetzanschlag, der als umlaufender Ringabsatz ausgebildet ist, erfordert keine Verdrehsicherung zwischen dem Einsetzanschlag sowie der auf dem Einsetzanschlag anliegenden Einsetzpatrone.

Besonders vorteilhaft ist es, wenn die Einsetzpatrone ein Patronengehäuse hat, welches an seinem Gehäuseaußenumfang einen vorzugsweise als Ringflansch oder Ringabsatz ausgebildeten Gegenanschlag hat, welcher Gegenanschlag in der Gebrauchsstellung am Einsetzanschlag anliegt. Ist am Patronengehäuse der Einsetzpatrone ein als Ringflansch oder Ringabsatz ausgebildeter Gegenanschlag vorgesehen, wird die Einsetzpatrone auch bei hohen Wasserdrücken sicher und fest im zweiten Auslaufteil gehalten, ohne dass beim Einbau dieser Einsetzpatrone auf deren Relativposition zum zweiten Auslaufteil geachtet werden müsste.

Ein vorteilhaftes Anwendungsbeispiel für den erfindungsgemäßen Wasserauslauf sieht vor, mithilfe dieses erfindungsgemäßen Wasserauslaufes eine entsprechende Einsetzpatrone schnell und leicht lösbar am Auslaufende einer sanitären Auslaufarmatur zu befestigen. Möglich ist aber auch, dass der erfindungsgemäße Wasserauslauf Bestandteil einer Pflanzenbewässerung ist, und dass die Pflanzenbewässerung vorzugsweise eine Mehrzahl voneinander beabstandeter Wasserausläufe hat.

Ein alternatives Ausführungsbeispiel gemäß der Erfindung sieht vor, dass die gewindelose Schnellkupplung zwischen den Kupplungs- oder Auslaufteilen als Steck- /Drehverbindung ausgebildet ist. Eine solche Steck- /Drehverbindung erlaubt die rasche und dennoch belastbare Verbindung der Auslaufteile, ohne dass deswegen zwischen den Auslaufteilen eine Schraubverbindung vorgesehen sein müsste.

Das ablaufseitige zweite Auslaufteil lässt sich in seiner Gebrauchsstellung auf einfache Weise und belastbar am zuströmseitigen ersten Auslaufteil fixieren, wenn an dem einen und vorzugsweise dem ersten Auslaufteil außenumfangsseitig ein Ringflansch oder Ringabsatz der Schnellkupplung vorgesehen ist, und wenn an dem anderen und insbesondere dem zweiten Auslaufteil wenigstens ein Federsteg der Schnellkupplung vorgesehen ist, welcher Federsteg zwischen einer ausgefederten Lösestellung und einer demgegenüber eingefederten Haltestellung bewegbar ist, in welcher Haltestellung der zumindest eine Federsteg mit einer an seinem freien Stegende angeformten Rastnocke den Ringabsatz oder Ringflansch der Schnellkupplung hintergreift. Durch einfaches Ausfedern des wenigstens einen Federsteges lässt sich die Schnellkupplung zwischen den Auslaufteilen rasch lösen, wenn das zweite Auslaufteil vom ersten Auslaufteil gelöst und auf den Hülseninnenraum des zweiten Auslaufteiles anschließend zugegriffen werden soll.

Eine besonders belastbare und dennoch einfache Ausführung gemäß der Erfindung sieht dabei vor, dass an einem der Auslaufteile und insbesondere am zweiten Auslaufteil wenigstens zwei, vorzugsweise paarweise auf gegenüberliegenden Seiten dieses Auslaufteiles angeordnete Federstege vorgesehen sind.

Die Handhabung der Federstege lässt sich noch zusätzlich vereinfachen und die paarweise einander zugeordneten Federstege können praktisch zeitgleich und auf einfache Weise in ihre Lösestellung gebracht werden, wenn die Federstege über einen an den Federstegen beidseits angreifenden und elastisch verformbaren Verbindungsring verbunden sind, und wenn die Federstege durch außenseitige Druckbeaufschlagung des Verbindungsringes in zumindest einem vom Wasserauslauf beabstandeten Ringabschnitt aus ihrer Halteposition in die Lösestellung ausfederbar sind. Somit können durch einfache außenseitige Druckbeaufschlagung des Verbindungsringes gleichzeitig die paarweise einander zugeordneten Federstege in ihre Lösestellung gebracht werden, in welcher Lösestellung sich das abströmseitige zweite Auslaufteil vom zuströmseitigen ersten Auslaufteil trennen lässt.

Dabei sieht eine besonders funktionsgerechte Ausführung gemäß der Erfindung vor, dass der Verbindungsring eine etwa ovale Ringform hat, und dass das Federsteg-Paar auf den einander nächstkommenden gegenüberliegenden Teilbereichen der ovalen Ringform an den Verbindungsring angeformt sind. Durch Druckbeaufschlagung des Verbindungsringes insbesondere an seinen demgegenüber außenliegenden Teilbereichen lässt sich der Verbindungsring von seiner ovalen Ringform in eine nahezu kreisrunde Ringform bringen, derart, dass das Federsteg-Paar in seine Lösestellung ausfedern kann.

Eine funktionale und besonders einfach zu handhabende Ausführung gemäß der Erfindung sieht vor, dass der zumindest eine Federsteg in einem von den beiden Stegenden beanstandeten Stegabschnitt dieses Federsteges an das Auslaufteil angeformt ist, dass der Stegabschnitt diesen Federsteg in zwei Stegarme unterteilt, von denen ein erster Stegarm an seinem freien Stegende die Rastnocke trägt und von denen ein zweiter Stegarm als Drucktaster ausgebildet ist, und dass der zumindest eine Federsteg um eine im Bereich zwischen dem Stegabschnitt und dem daran angeformten Auslaufteil angeordnete Schwenkachse derart elastisch verschwenkbar ist, dass der zumindest eine Federsteg durch Druckbeaufschlagung seines Drucktasters aus der Halteposition in die Lösestellung bewegbar ist.

Eine besonders vorteilhafte Weiterbildung gemäß der Erfindung sieht vor, dass das eine Auslaufteil und vorzugsweise das zuströmseitige Auslaufteil zumindest einen Kupplungszapfen aufweist, dass der zumindest eine Kupplungszapfen in eine zugeordnete Kupplungsöffnung am anderen Auslaufteil einsetzbar ist, dass der zumindest eine Kupplungszapfen und die zugeordnete Einsetzöffnung der Schnellkupplung in einer quer zur Längserstreckung der Auslaufteile orientierte Einsteckrichtung miteinander verbindbar sind, und dass die Auslaufteile gegen ein Lösen des zumindest einen Kupplungszapfens aus der ihm zugeordneten Einstecköffnung entgegen der Einstecköffnung mithilfe eines hülsenförmigen Sicherungselementes sicherbar sind, welches Sicherungselement die Auslaufteile in ihrer Gebrauchsstellung formschlüssig umgreift.

Diese weiterbildende Ausführungsform gemäß der Erfindung kann als Wasserauslauf und insbesondere als sanitärer Wasserauslauf ausgebildet sein, bei dem im Hülseninnenraum zumindest eines Auslaufteiles und insbesondere des abströmseitigen Auslaufteiles eine Einsetzpatrone einsetzbar ist, die einen Strahlregler und/oder einen Durchflussmengenregler und/oder ein Vorsatzsieb beinhaltet.

Ist diese weiterbildende Ausführungsform als Wasserauslauf ausgebildet, kann in zumindest eines der Auslaufteile und vorzugsweise in das ablaufseitige zweite Auslaufteil eine Einsetzpatrone eingesetzt oder eingeschraubt werden. Um die einander zugeordneten Auslaufteile sicher und flüssigkeitsdicht miteinander zu verbinden, kann eine zusätzliche Sicherung vorgesehen sein, die beispielsweise mittels einer Nut-/Nase-Lösung am zuströmseitigen ersten Auslaufteil und an der Innenseite einer die Auslaufteile in Haltestellung übergreifende Schiebehülse gebildet ist. Diese Schiebehülse kann auch einen umlaufenden Vorsprung an ihrem Hülseninnenumfang aufweisen und mit entsprechenden Haltemitteln am Außenumfang des zuströmseitigen ersten Auslaufteiles oder andersherum gesichert miteinander verbunden sein.

Eine alternative, besonders einfache und leicht herstellbare Ausführungsform gemäß der Erfindung sieht vor, dass das zulaufseitige erste Auslaufteil einen Einschubschlitz aufweist, und dass am ablaufseitigen zweiten Auslaufteil umfangsseitig zumindest ein Einschubflügel vorsteht, der quer zur Längserstreckung des zweiten Auslaufteiles in den Einschubschlitz bis in die Gebrauchsstellung einschiebbar ist. Bei dieser vorteilhaften Ausführungsform des erfindungsgemäßen Wasserauslaufs kann das ablaufseitige zweite Auslaufteil mit seinem zumindest einen umfangsseitig vorstehenden Einschubflügel in einen Einschubschlitz eingeschoben werden, welcher Einschubschlitz seitlich am zulaufseitigen ersten Auslaufteil vorgesehen ist. Dabei wird der zumindest eine Einschubflügel am ablaufseitigen zweiten Auslaufteil quer zur Längserstreckung des ersten Auslaufteiles in dessen Einschubschlitz bis in die Gebrauchsstellung eingeschoben, in welcher Gebrauchsstellung die Auslaufteile in Durchflussrichtung miteinander fluchten.

Die Handhabung der die Auslaufteile miteinander verbindenden Schnellkupplung wird wesentlich vereinfacht, wenn der Einschubflügel als ein am zweiten Auslaufteil umlaufender Ringflansch ausgebildet ist. Somit kann der am zweiten Auslaufteil vorgesehene Einschubflügel in jeder Drehposition des zweiten Auslaufteiles auf einfache Weise seitlich in den Einschubschlitz am ersten Auslaufteil bewegt werden.

Eine weitere, besonders einfache und vorteilhafte Ausführungsform gemäß der Erfindung sieht vor, dass die Steck-/Drehverbindung als Bajonett- oder Renkverbindung ausgebildet ist, und dass eines der Auslaufteile derart auf das andere Auslaufteil aufschiebbar ist, bis ein an dem einen Auslaufteil außen- oder innenumfangsseitig vorstehender Kupplungszapfen oder dergleichen Kupplungsvorsprung einen an dem anderen Auslaufteil vorgesehenen und quer zur Einschubrichtung orientierten Randbereich hintergreift.

Um die einfache Handhabung des eine solche Bajonett- oder Renkverbindung aufweisenden Wasserauslaufs zu begünstigen, ist es vorteilhaft, wenn das eine der Auslaufteile derart auf das andere Auslaufteil aufschiebbar ist, bis ein an einem der Auslaufteile vorgesehener Aufschiebeanschlag die Steck- oder Aufschiebebewegung der Auslaufteile zueinander begrenzt.

Eine konstruktiv besonders einfache und leicht herstellbare Ausführungsform gemäß der Erfindung sieht vor, dass der Aufschiebeanschlag als Ringabsatz ausgebildet ist.

Um die zur Betätigung der Schnellkupplung erforderliche Steck- /Dehbewegung auf einfache Weise durchführen zu können, ist es vorteilhaft, wenn an dem auf das andere Auflaufteil aufschiebbaren Auslaufteil wenigstens ein Betätigungselement außenumfangsseitig vorgesehen ist und vorzugweise radial vorsteht. Das zumindest eine, außenumfangsseitig vorgesehene und vorzugsweise radial vorstehende Betätigungselement erleichtert die Steck- und insbesondere auch die Drehbewegung der Auslaufteile relativ zueinander, die zum Betätigen der zwischen den Auslaufteilen vorgesehenen Schnellkupplung erforderlich ist.

Dabei sieht eine besonders vorteilhafte und praktikable Ausführungsform gemäß der Erfindung vor, dass das wenigstens eine Betätigungselement als Betätigungsflügel ausgebildet ist und dass am Auslaufteil mindestens zwei, vorzugsweise in gleichmäßigen Abständen voneinander beabstandete Betätigungsflügel vorstehen.

Nachstehend wird die Erfindung anhand bevorzugter Ausführungsbeispiele noch näher beschrieben. Weitere Merkmale der Erfindung ergeben sich aus der nachfolgenden Beschreibung erfindungsgemäßer Ausführungsbeispiele in Verbindung mit den Ansprüchen sowie der Zeichnung.

Es zeigt:
- Fig. 1: einen hier längsgeschnitten dargestellten Wasserauslauf mit einem zuströmseitigen Auslaufteil und einem abströmseitigen Auslaufteil, welche Auslaufteile in ihrer Gebrauchsstellung mittels einer Schnellkupplung aneinander fixiert sind, die auf gegenüberliegenden Seiten des Wasserauslaufs angeordnete Federstege hat,
- Fig. 2: den Wasserauslauf aus Figur 1 in einer perspektivischen Darstellung mit Blick auf dessen Auslaufteile, wobei sich die Auslaufteile des Wasserauslaufs hier in ihrer aneinander fixierten Gebrauchsstellung befinden,
- Fig. 3: den ebenfalls längstgeschnitten dargestellten Wasserauslauf aus den Figuren 1 und 2, wobei die Auslaufteile sich hier in ihre voneinander getrennte Lösestellung bewegen, und wobei die Federstege der die Auslaufteile miteinander verbindenden Schnellkupplung hier ausreichend ausgefedert sind,
- Fig. 4: den Wasserauslauf aus den Figuren 1 bis 3 in einer perspektivischen Einzelteildarstellung mit Blick auf die Abströmseite seiner Bestandteile, wobei das abströmseitige Auslaufteil in zwei, vom zuströmseitigen Auslaufteil zunehmend beabstandeten Positionen gezeigt ist,
- Fig. 5: den Wasserauslauf aus den Figuren 1 bis 4 in einer auseinandergezogenen Einzeldarstellung mit Blick auf die Zuströmseite seiner Bestandteile, wobei das abströmseitige Auslaufteil in zwei, vom zuströmseitigen Auslaufteil zunehmend beabstandeten Positionen gezeigt ist,
- Fig. 6: ein weiteres Ausführungsbeispiel eines mit Fig. 1 bis 5 vergleichbar ausgestalteten Wasserauslaufs, wobei die zum Fixieren der Auslaufteile in Gebrauchsstellung erforderliche Schnellkupplung zwei, auf gegenüberliegenden Seiten des Wasserauslaufs angeordnete Federstege hat, die über einen gemeinsamen ovalen Verbindungsring betätigt werden können,
- Fig. 7: den Wasserauslauf aus Fig. 6 in einer perspektivischen Darstellung mit Blick auf die Zuströmseite seiner Bestandteile,
- Fig. 8: den Wasserauslauf aus den Fig. 6 und 7 in einer perspektivischen Darstellung mit Blick auf die Abströmseite seiner Bestandteile,
- Fig. 9: den Wasserauslauf aus den Fig. 6 bis 8 in einer Seitenansicht,
- Fig. 10: den Auslauf aus den Fig. 6 bis 9 in einer gegenüber Fig. 9 um 90° gedrehten Seitenansicht,
- Fig. 11: den Wasserauslauf aus den Fig. 6 bis 10, wobei die hier längsgeschnitten dargestellten Auslaufteile sich in ihre Lösestellung bewegen, in welcher Lösestellung das abströmseitige Auslaufteil vom zuströmseitigen Auslaufteil getrennt werden kann,
- Fig. 12: den Wasserauslauf aus den Fig. 6 bis 11 in der Lösestellung seiner Auslaufteile, wobei hier das abströmseitige Auslaufteil vom zuströmseitigen Auslaufteil bereits getrennt ist und die zum Fixieren der Auslaufteile aneinander vorgesehene Schnellkupplung bereits außer Eingriff ist,
- Fig. 13: den Wasserauslauf aus den Fig. 6 bis 12 in einer perspektivischen Darstellung, wobei die Bestandteile des Wasserauslaufs hier mit Blick auf die Abströmseite dieser Bestandteile dargestellt sind,
- Fig. 14: den Wasserauslauf aus den Fig. 6 bis 13 in einer auseinandergezogenen perspektivischen Darstellung seiner Bestandteile mit Blick auf die Abströmseite dieser Bestandteile,
- Fig. 15: den Wasserauslauf aus den Fig. 6 bis 14 in einer auseinandergezogenen perspektivischen Darstellung seiner Bestandteile mit Blick auf die Zuströmseite dieser Bestandteile,
- Fig. 16: einen in einer perspektivischen Darstellung gezeigten Wasserauslauf mit einem zulaufseitigen ersten Auslaufteil und einem abströmseitigen zweiten Auslaufteil, welche Auslaufteile über eine Schnellkupplung miteinander verbindbar sind, welche Schnellkupplung hier als Steck-/Dreh-Verbindung und speziell als Bajonett- oder Renkverbindung ausgebildet ist,
- Fig. 17: den Wasserauslauf aus Fig. 16 in einem Längsschnitt durch seine hier in der Gebrauchsstellung miteinander verbundenen Auslaufteile, wobei im abströmseitigen zweiten Auslaufteil, das hülsenförmig ausgebildet ist, eine Einsetzpatrone angeordnet ist,
- Fig. 18: den Wasserauslauf aus Fig. 16 und 17 in einer auseinandergezogenen Perspektivdarstellung mit Blick auf die Abströmseite der einzelnen Bestandteile des Wasserauslaufs,
- Fig. 19: den Wasserauslauf aus den Fig. 16 bis 18 in einer auseinandergezogenen Perspektivdarstellung mit Blick auf die zulaufseitige Stirnfläche der Bestandteile des Wasserauslaufs,
- Fig. 20: einen in einer Perspektivdarstellung gezeigten Wasserauslauf, bei dem die zwischen den Auslaufteilen vorgesehene Schnellkupplung ebenfalls als Bajonett- oder Renkverbindung ausgebildet ist, wobei die Auslaufteile dieses Wasserauslaufs hier in ihrer miteinander verbundenen Gebrauchsstellung dargestellt sind,
- Fig. 21: den Wasserauslauf aus Fig. 20 in einem Längsschnitt durch seine miteinander verbundenen Auslaufteile,
- Fig. 22: den Wasserauslauf aus den Fig. 20 und 21 in einer auseinandergezogenen Perspektivdarstellung seiner Bestandteile mit Blick auf die Abströmseite dieser Bestandteile,
- Fig. 23: den Wasserauslauf aus den Fig. 20 bis 22 in einer auseinandergezogenen Perspektivdarstellung mit Blick auf die zuströmseitige Stirnfläche der Bestandteile dieses Wasserauslaufs,
- Fig. 24: einen Wasserauslauf mit einem zuströmseitigen ersten Auslaufteil und einem abströmseitigen zweiten Auslaufteil, wobei am zuströmseitigen ersten Auslaufteil ein Einschubschlitz vorgesehen ist, in welchen Einschubschlitz das im wesentlichen hülsenförmige zweite Auslaufteil mit einem umlaufenden und als Ringflansch ausgebildeten Einschubflügel bis in die Gebrauchsstellung einschiebbar ist, in welcher Gebrauchsstellung die Auslaufteile in Durchströmrichtung miteinander fluchten, und
- Fig. 25: den Wasserauslauf aus Fig. 24 in einem Längsschnitt.

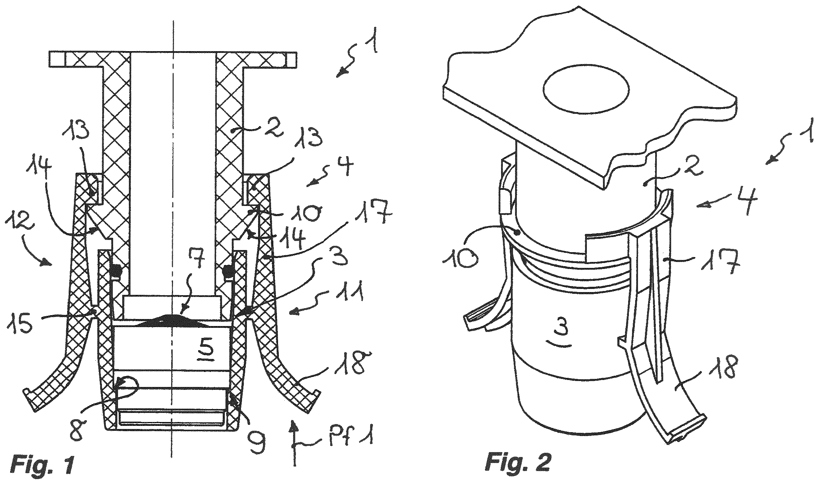

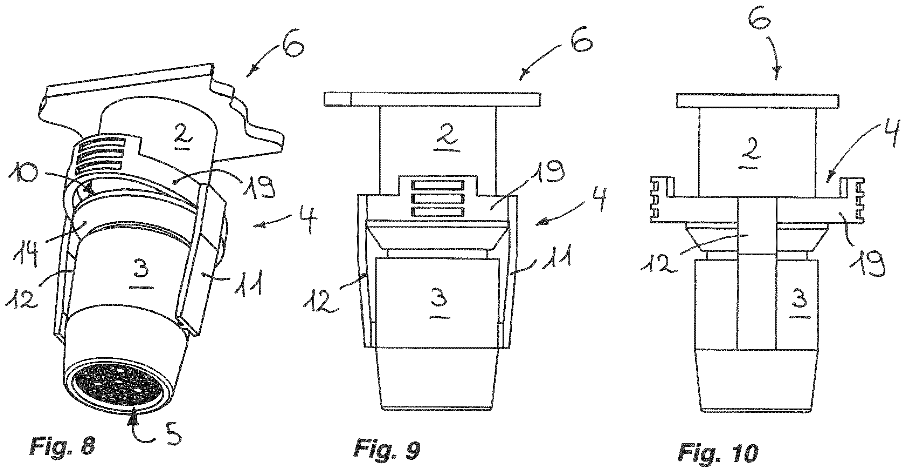

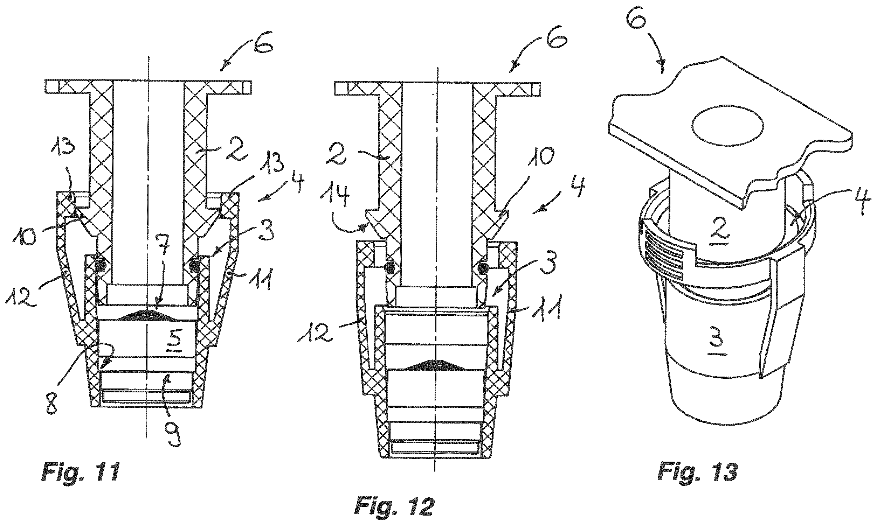

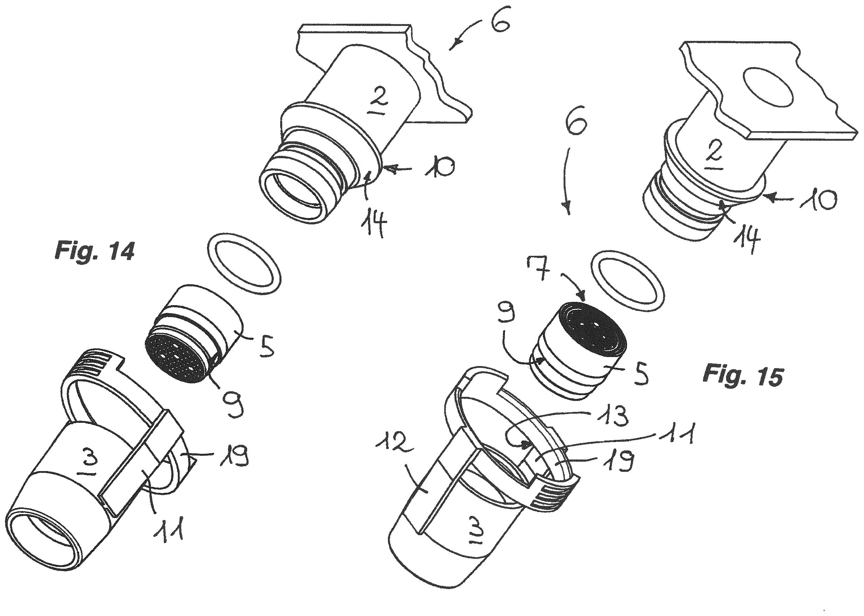

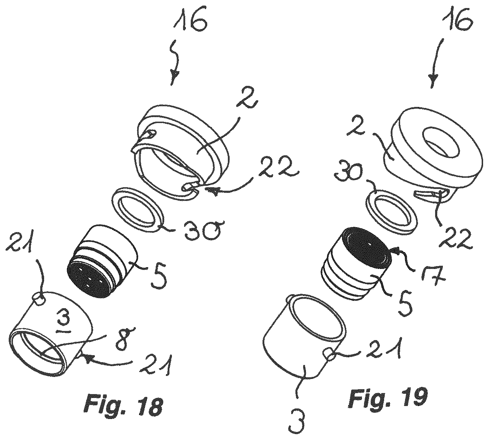

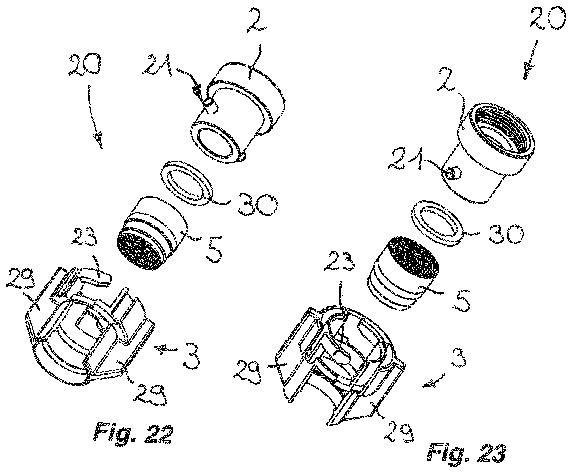

In den Fig. 1 bis 25 sind verschiedene Ausführungen 1, 6, 16, 20 und 24 eines sanitären Wasserauslaufs dargestellt. Die hier dargestellten Wasserausläufe 1, 6, 16, 20 und 24 sind an einem abströmseitigen Ende oder einem der abströmseitigen Enden einer Wasserleitung vorgesehen, um das dort ausströmende Wasser als homogenen Gesamtstrahl oder als einen aus einer Mehrzahl von Einzelstrahlen gebildeten Spraystrahl zu formen und austreten zu lassen.

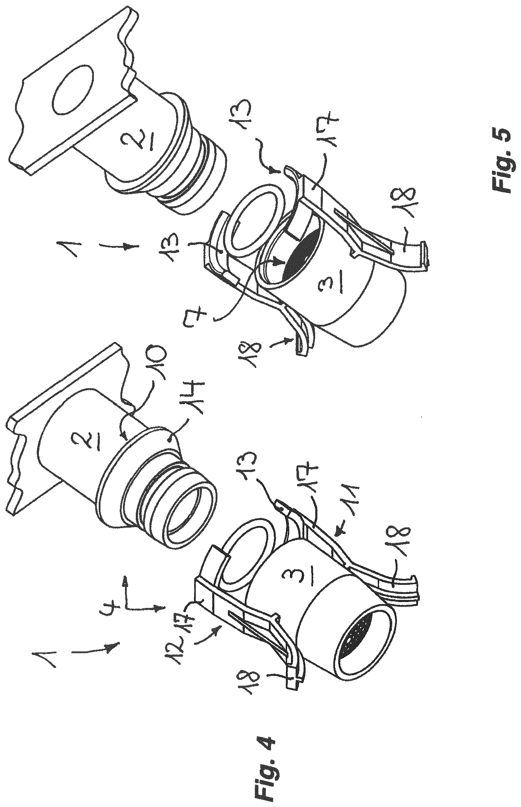

Die hier dargestellten Wasserausläufe 1, 6, 16, 20 und 24 weisen jeweils ein zulaufseitiges erstes Auslaufteil 2 und ein auslaufseitiges zweites Auslaufteil 3 auf, die zwischen einer in den Fig. 4 und 5, 14 und 15, 18 und 19 beziehungsweise 22 und 23 dargestellten Lösestellung und einer in den Fig. 1 bis 3, 6 bis 13, 16 bis 17, 20 bis 21 und 24 bis 25 gezeigten Gebrauchsstellung relativ zueinander bewegbar und in der Gebrauchsstellung aneinander fixierbar sind.

In der Gebrauchsstellung sind das erste Auslaufteil 2 und das hülsenförmig ausgebildete zweite Auslaufteil 3 miteinander verbunden und mittels einer gewindelosen Schnellkupplung 4 aneinander lösbar fixierbar. Wie aus den Schnittdarstellungen in den Fig. 1, 3, 6, 11, 12, 17, 21 und 25 erkennbar ist, kann in den Hülseninnenraum des ablaufseitigen zweiten Auslaufteiles 3 eine Einsetzpatrone 5 eingesetzt werden, die einen Strahlregler und/oder einen Durchflussmengenregler und/oder ein Vorsatzsieb aufweist. Während der in der Einsetzpatrone 5 befindliche Strahlregler das ausströmende Wasser zu einem Spraystrahl oder zu einem homogenen und nicht-spritzenden Gesamtstrahl zu formen hat, soll der Durchflussmengenregler die pro Zeiteinheit ausströmende Wassermenge begrenzen oder auf einen druckunabhängig festgelegten Maximalwert einregeln. Das an der Einsetzpatrone 5 vorgeschaltete Vorsatzsieb 7 soll die im anströmenden Wasser mitgerissenen Kalk- oder sonstigen Schmutzpartikel ausfiltern, bevor diese die Funktionalität der in der Einsetzpatrone 5 nachgeschalteten Durchflussmengenregler beziehungsweise Strahlregler beeinträchtigen können.

Wie aus einem Vergleich der Fig. 1 bis 25 deutlich wird, kann die Schnellkupplung 4 außenseitig an dem ersten Auslaufteil 2 gehalten und in Gebrauchsstellung axial beanstandet zu dem zweiten Auslaufteil 3 angeordnet sein.

Aus einem Vergleich der Fig. 1, 3, 6, 11, 12, 14, 15, 18 bis 19, 22 bis 23 und 25 wird deutlich, dass die Einsetzpatrone 5 von der zuströmseitigen Stirnseite des auslaufseitigen Auslaufteiles 3 aus in den Hülseninnenraum des zweiten Auslaufteiles 3 eingesetzt werden kann, bis zumindest ein außenumfangsseitiger Gegenanschlag an der Einsetzpatrone 5 an wenigstens einem innenumfangsseitigen Einsetzanschlag des zweiten Auslaufteiles 3 aufliegt. Dieser Einsetzanschlag und/oder der Gegenanschlag können jeweils als ein Ringabsatz 8, 9 ausgebildet sein, die am Hülseninnenumfang des zweiten Auslaufteiles 3 oder am Gehäuseaußenumfang der Einsetzpatrone 5 umlaufen.

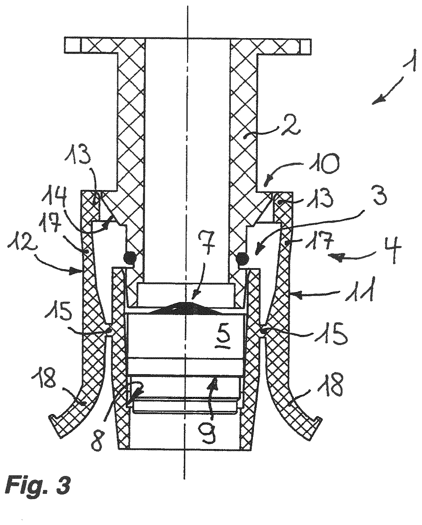

Wie aus einem Vergleich der Fig. 1 bis 5 und 6 bis 15 deutlich wird, weisen die dort gezeigten Wasserausläufe 1, 6 an ihrem einen und vorzugsweise an ihrem ersten Auslaufteil 2 außenumfangsseitig einen Ringabsatz oder Ringflansch 10 der Schnellkupplung 4 auf, während an dem anderen und insbesondere an dem zweiten Auslaufteil 3 wenigstens ein Federsteg und vorzugsweise zwei, auf gegenüberliegenden Seiten des Auslaufteiles 3 angeordnete Federstege 11, 12 vorgesehen sind. Diese Federstege 11, 12 sind zwischen einer, in den Fig. 3 beziehungsweise 11 und 12 gezeigten Lösestellung und einer demgegenüber eingefederten, in den Fig. 1 beziehungsweise 6 und 7 erkennbaren Haltestellung bewegbar, in welcher Haltestellung die Federstege 11, 12 jeweils mit einer an ihrem freien Stegende angeformten Rastnocke 13 den Ringabsatz oder Ringflansch 10 der Schnellkupplung 4 hintergreifen. Der am ersten Auslaufteil 2 vorgesehene Ringabsatz oder Ringflansch 10 der an den Wasserausläufen 1, 6 vorgesehenen Schnellkupplungen 4 weist eine sich in Einsteckrichtung Pf 1 vorzugsweise konisch erweiternde Aufschiebeschräge 14 auf, die beim Aufstecken des zweiten Auslaufteiles 3 auf das erste Auslaufteil 2 zunächst ein Ausfedern der Federstege 11, 12 bewirken, bevor diese Federstege 11, 12 mit ihrer Rastnocke 13 den Ringabsatz oder den Ringflansch 10 hintergreifen und in der Haltestellung wieder einfedern können.

Wie aus den Fig. 1 bis 5 ersichtlich ist, sind die Federstege 11, 12 des dort gezeigten Wasserauslaufs 1 in einem von den beiden freien Stegenden beanstandeten Stegabschnitt 15 dieser Federstege 11, 12 an das zweite Auslaufteil 3 angeformt, so dass dieser Stegabschnitt 15 der Federstege 11, 12 diese in zwei Stegarme 17, 18 unterteilt, von denen ein erster Stegarm 17 an seinem freien Stegende die Rastnocke 13 trägt und von denen ein zweiter Stegarm 18 als Drucktaster ausgebildet ist. Dabei können die Federstege 11, 12 des Wasserauslaufs 1 um eine im Bereich zwischen dem Stegabschnitt 15 und dem daran angeformten Auslaufteil 3 angeordnete Schwenkachse derart elastisch verschwenkt werden, dass die Federstege 11, 12 jeweils durch vorzugsweise zeitgleiche Druckbeaufschlagung der als Drucktaster dienenden Stegarme 18 aus der Halteposition in die Lösestellung zu bewegen sind. Dabei wird eine zeitgleiche Betätigung der Federstege 11, 12 dadurch erleichtert, dass diese Federstege 11, 12 paarweise auf gegenüberliegenden Seiten dieses Auslaufteiles 3 angeordnet sind und deshalb auch mit einer Hand des Anwenders auf einfache Weise gleichzeitig betätigt werden können.

Damit die Federstege 11, 12 am Wasserauslauf 1 den Ringabsatz oder Ringflansch 10 mit ihrer Rastnocke 13 gut und belastbar hintergreifen können, ist das freie Stegende am Stegarm 17 etwa T-förmig ausgebildet, so dass die über zumindest einen großen Teilbereich der Längserstreckung des T-Quersteges vorgesehene Rastnocke 13 den Ringabsatz oder Ringflansch 10 über einen entsprechend großen Teilbereich hintergreifen kann.

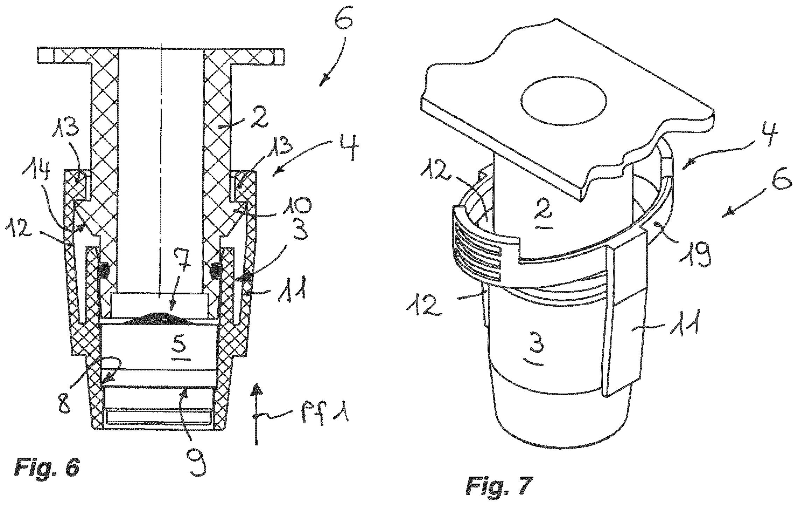

Wie aus den Fig. 6 bis 15 erkennbar ist, sind die ebenfalls paarweise auf gegenüberliegenden Seiten des abströmseitigen Auslaufteiles 3 angeordneten Federstege 11, 12 des Wasserauslaufs 6 über einen an den Federstegen 11, 12 beidseits angreifenden und elastisch verformbaren Verbindungsring 19 miteinander verbunden. Dieser, die Federstege 11, 12 miteinander verbindende Verbindungsring 19 weist in seiner entspannten Position eine ovale Formgebung auf, wobei der Verbindungsring 19 durch Druckbeaufschlagung an den von den Federstegen 11, 12 beanstandeten Teilbereichen des Verbindungsringes 19 in eine im wesentlichen runde Form elastisch verformt werden kann. Dabei sind die Federsteg-Paare 11, 12 auf den einander nächstkommenden gegenüberliegenden Teilbereichen der ovalen Ringform des Verbindungsrings 19 angeformt. Wird nun der Verbindungsring 19 durch Druckbeaufschlagung von seiner entspannten ovalen Ringform in eine demgegenüber im Wesentlichen kreisrunde Ringform gebracht, federn die mit ihren freien Stegenden angeformten Federstege 11, 12 elastisch derart aus, dass sich diese Federstege 11, 12 mit ihren Rastnocken 13 jeweils in einer Lösestellung befinden, in welcher Lösestellung der Federstege 11, 12 das abströmseitige Auslaufteil 3 vom zuströmseitigen Auslaufteil 2 des Wasserauslaufs 6 abgezogen und auf einfache Weise getrennt werden kann.

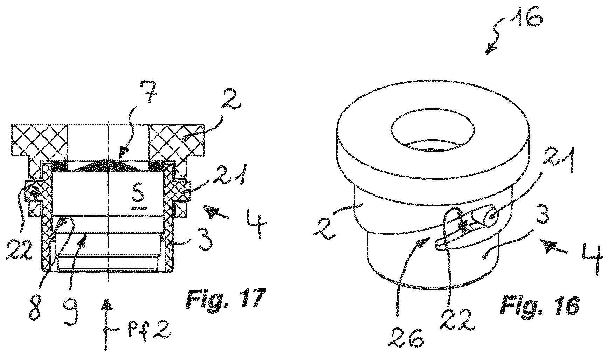

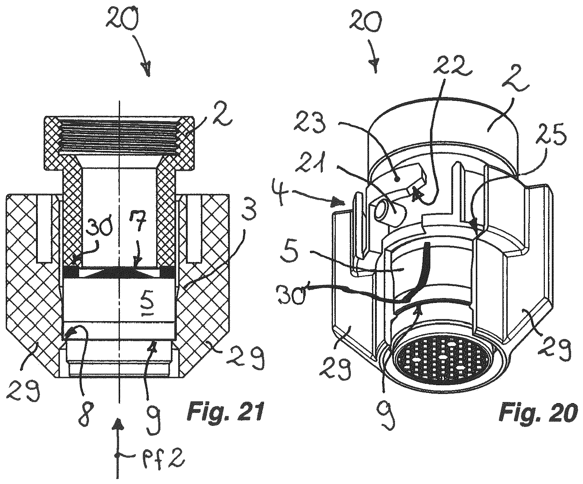

In den Fig. 16 bis 19 und 20 bis 23 sind Wasserausläufe 16 und 20 dargestellt, bei denen die die Auslaufteile 2, 3 in Gebrauchsstellung miteinander verbindende Schnellkupplung 4 als Steck-/Drehverbindung und speziell als Bajonett- oder Renkverbindung ausgebildet ist. Dabei ist eines der durch eine axial wirksame Ringdichtung 30 nach außen hin abgedichteten Auslaufteile 2, 3 und hier jeweils das abströmseitige zweite Auslaufteil 3 auf das andere, hier das zuströmseitige erste Auslaufteil 2 aufschiebbar, bis ein an dem einen Auslaufteil 3 außenumfangsseitig vorstehender Kupplungszapfen 21 einen an dem anderen Auslaufteil 2 vorgesehenen und quer zur Steck- oder Einschubrichtung Pf 2 der Auslaufteile 2, 3 orientierter Randbereich 22 hintergreift. Dieser Randbereich 22 wird bei dem in den Fig. 20 bis 23 dargestellten Wasserauslauf 20 durch den dem zuströmseitigen ersten Auslaufteil 2 abgewandten Rand eines Riegels 23 gebildet, der quer zur Längserstreckung der Auslaufteile 2, 3 orientiert und aus der Umfangswandung des abströmseitigen zweiten Auslaufteiles 3 gebildet ist. Dabei ist das abströmseitige zweite Auslaufteil 3 derart auf das zuströmseitige erste Auslaufteil 2 aufschiebbar, bis ein zwischen den Auslaufteilen vorgesehener Aufschiebeanschlag 25 die Steck- oder Aufschiebebewegung der Auslaufteile 2, 3 begrenzt. Dieser Aufschiebeanschlag 25 wird durch einen am ersten Auslaufteil vorgesehenen und als Anschlag dienenden Ringabsatz gebildet, der mit einem am Innenumfang des auslaufseitigen zweiten Auslaufteiles vorgesehenen und als Gegenanschlag dienenden Ringabsatz zusammenwirkt.

Bei dem in den Fig. 16 bis 19 dargestellten Wasserauslauf 16 weist das zuströmseitige erste Auslaufteil 2 einen quer zur Steck- oder Einschubrichtung Pf 2 orientierten und in Einschubrichtung Pf 2 ansteigenden Schlitz 26 auf, in den der am Außenumfang des abströmseitigen zweiten Auslaufteiles 3 vorstehende Kupplungszapfen 21 einführbar ist. Während der dem abströmseitigen zweiten Auslaufteil 3 zugewandte Schlitzrand als Einschubanschlag dient, wird der gegenüberliegende Schlitzrand 22 vom Kupplungszapfen 21 hintergriffen. Die an den Wasserausläufen 16, 20 vorgesehenen Schnellkupplungen 4 lassen sich durch einfache Steck- und Drehbewegungen in ihre Gebrauchsstellung oder ihre Löseposition bewegen.

In den Fig. 20 bis 23 ist erkennbar, dass an dem auf das andere Auslaufteil 2 aufschiebbaren Auslaufteil 3 des dort gezeigten Wasserauslaufs 20 wenigstens ein Betätigungselement vorgesehen ist. Dieses radial vorstehende, wenigstens eine Betätigungselement ist hier als Betätigungsflügel 29 ausgebildet, wobei am Auslaufteil 3 des hier dargestellten Wasserauslaufs 20 mindestens zwei, vorzugsweise in gleichmäßigen Abständen voneinander beabstandete Betätigungsflügel 29 vorstehen.

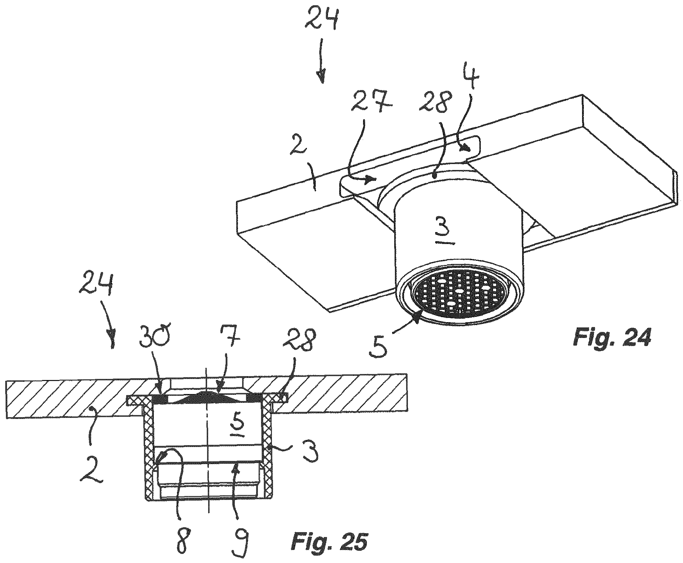

In den Fig. 24 und 25 ist ein Wasserauslauf 24 dargestellt, bei dem das zulaufseitige erste Auslaufteil 2 einen Einschubschlitz 27 aufweist. Am ablaufseitigen zweiten Auslaufteil 3 ist umfangsseitig zumindest ein Einschubflügel vorgesehen, der hier als ein am zweiten Auslaufteil 3 umlaufender Ringflansch 28 ausgebildet ist. Das abströmseitige zweite Auslaufteil 3 kann mit seinem umfangsseitig vorstehenden und als Ringflansch 28 ausgebildeten Einschubflügel quer zur Längserstreckung des zweiten Auslaufteiles 3 in den am ersten Auslaufteil 2 vorgesehenen Einschubschlitz 27 bis in die Gebrauchsstellung eingeschoben werden, in welcher Gebrauchsstellung die Auslaufteile 2, 3 in Durchströmrichtung miteinander fluchten. Der als Einschubflügel dienende Ringflansch 28 ist am zulaufseitigen Stirnrand des zweiten Auslaufteiles 3 umfangsseitig angeordnet und an das zweite Auslaufteil 3 vorzugsweise einstückig angeformt.

Aus einer zusammenschauenden Betrachtung der Fig. 1 bis 25 ist erkennbar, dass das zulaufseitige erste Auslaufteil 2 als separater Bestandteil des Wasserauslaufs ausgebildet sein kann, wobei ein solches zulaufseitiges erstes Auslaufteil 2 am abströmseitigen Ende einer sanitären Auslaufarmatur vorzugsweise lösbar befestigt sein kann. Möglich ist aber auch, dass der abströmseitige Endbereich des Armaturenkorpus einer sanitären Auslaufarmatur das zulaufseitige erste Auslaufteil 2 bildet oder mit diesem einstückig verbunden ist.

### Bezugszeichenliste

- 1: Wasserauslauf gemäß den Fig. 1 bis 5
- 2: zuströmseitiges erstes Wasserablauf- oder Wasserauslaufteil
- 3: abströmseitiges zweites Wasserablauf- oder Wasserauslaufteil
- 4: Schnellkupplung
- 5: Einsetzpatrone
- 6: Wasserauslauf gemäß den Fig. 6 bis 15
- 7: Vorsatzsieb
- 8: als Einsetzanschlag dienender Ringabsatz
- 9: als Gegenanschlag dienender Ringabsatz
- 10: Ringflansch oder Ringabsatz
- 11: Federsteg am Wasserauslauf 1, 6
- 12: Federsteg am Wasserauslauf 1, 6
- 13: Rastnocke an den Federstegen 11, 12
- 14: Aufschiebeschräge
- 15: Stegabschnitt am zweiarmigen Federsteg 11, 12 des Wasserauslaufs 1
- 16: Wasserauslauf gemäß den Fig. 16 bis 19
- 17: erster Stegarm
- 18: zweiter Stegarm
- 19: Verbindungsring an den Federstegen 11, 12 des Wasserablaufs oder Wasserauslaufs 6
- 20: Wasserauslauf gemäß den Fig. 20 bis 23
- 21: Kupplungszapfen
- 22: Randbereich
- 23: Riegel
- 24: Wasserauslauf gemäß den Fig. 24 und 25
- 25: Aufschiebeanschlag
- 26: Kupplungsschlitz
- 27: Einschubschlitz
- 28: Ringflansch
- 29: Betätigungselement oder Betätigungsflügel
- 30: Ringdichtung
- Pf 1: Einsetzrichtung
- Pf 2: Einsteck- oder Einschubrichtung

## Patentansprüche

1. Wasserauslauf (1, 6, 16, 20, 24), insbesondere sanitärer Wasserauslauf, mit einem zulaufseitigen ersten Auslaufteil (2) und einem ablaufseitigen zweiten Auslaufteil (3), die (2, 3) zwischen einer Lösestellung und einer Gebrauchsstellung bewegbar sind, in welcher Gebrauchsstellung die Auslaufteile (2, 3) in Durchströmrichtung miteinander verbunden und mittels einer Schnellkupplung (4) aneinander lösbar fixiert sind, wobei das ablaufseitige zweite Auslaufteil (3) hülsenförmig ausgebildet ist, und wobei in den Hülseninnenraum dieses zweiten Auslaufteiles (3) eine Einsetzpatrone (5) eingesetzt ist, die einen Strahlregler und/oder einen Durchflussmengenregler und/oder ein Vorsatzsieb (7) aufweist , und wobei die Schnellkupplung (4) außenseitig und axial beabstandet zu dem zweiten Auslaufteil (3) an dem ersten Auslaufteil (2) gehalten ist, wobei an dem einen, vorzugsweise dem ersten, Auslaufteil (2) außenumfangsseitig ein Ringflansch (10) oder Ringabsatz der Schnellkupplung (4) vorgesehen ist, und wobei an dem anderen, insbesondere dem zweiten, Auslaufteil (3) wenigstens ein Federsteg (11, 12) der Schnellkupplung (4) vorgesehen ist, welcher Federsteg (11, 12) zwischen einer ausgefederten Lösestellung und einer demgegenüber eingefederten Haltestellung bewegbar ist, in welcher Haltestellung der zumindest eine Federsteg (11, 12) mit einer an seinem freien Stegende angeformten Rastnocke (13) den Ringabsatz (10) oder Ringflansch der Schnellkupplung (4) hintergreift.

2. Wasserauslauf (1, 6) nach Anspruch 1, **dadurch gekennzeichnet, dass** an einem der Auslaufteile (2, 3) und insbesondere am zweiten Auslaufteil (3) wenigstens zwei, vorzugsweise paarweise auf gegenüberliegenden Seiten dieses Auslaufteiles (3) angeordnete Federstege (11, 12) vorgesehen sind.

3. Wasserauslauf (1, 6) nach Anspruch 1 oder 2, **dadurch gekennzeichnet, dass** die Federstege (11, 12) über einen an den Federstegen (11, 12) beidseits angreifenden und elastisch verformbaren Verbindungsring (19) verbunden sind, und dass die Federstege (11, 12) durch außenseitige Druckbeaufschlagung des Verbindungsringes (19) in zumindest einem vom Wasserauslauf (6) oder der Leitungskupplung beanstandeten Ringabschnitt aus ihrer Halteposition in die Lösestellung ausfederbar sind.

4. Wasserauslauf (6) nach Anspruch 3,
**dadurch gekennzeichnet, dass** der Verbindungsring (19) eine etwa ovale Ringform hat, und dass das Federsteg-Paar (11, 12) auf den einander nächstkommenden gegenüberliegenden Teilbereichen der ovalen Ringform an den Verbindungsring (19) angeformt sind.

5. Wasserauslauf (1) nach einem der Ansprüche 1 bis 4, **dadurch gekennzeichnet, dass** der zumindest eine Federsteg (11, 12) in einem von den beiden Stegenden beabstandeten Stegabschnitt (15) dieses Federsteges (11, 12) an das Auslaufteil (3) angeformt ist, dass der Stegabschnitt (15) diesen Federsteg (11, 12) in zwei Stegarme (17, 18) unterteilt, von denen ein erster Stegarm (17) an seinem freien Stegende die Rastnocke (13) trägt und von denen ein zweiter Stegarm (18) als Drucktaster ausgebildet ist, und dass der zumindest eine Federsteg (11, 12) um eine im Bereich zwischen dem Stegabschnitt (15) und dem daran angeformten Auslaufteil (3) angeordnete Schwenkachse derart elastisch verschwenkbar ist, wobei der zumindest eine Federsteg (11, 12) durch Druckbeaufschlagung seines Drucktasters aus der Halteposition in die Lösestellung bewegbar ist.

6. Wasserauslauf (24) mit einem zulaufseitigen ersten Auslaufteil (2) und einem ablaufseitigen zweiten Auslaufteil (3), die (2, 3) zwischen einer Lösestellung und einer Gebrauchsstellung bewegbar sind, in welcher Gebrauchsstellung die Auslaufteile (2, 3) in Durchströmrichtung miteinander verbunden sind, wobei das ablaufseitige zweite Auslaufteil (3) hülsenförmig ausgebildet ist, und wobei in den Hülseninnenraum dieses zweiten Auslaufteiles (3) eine Einsetzpatrone (5) eingesetzt ist, die einen Strahlregler und/oder einen Durchflussmengenregler und/oder ein Vorsatzsieb (7) aufweist, und wobei das zulaufseitige erste Auslaufteil (2) einen Einschubschlitz (27) aufweist, und wobei am ablaufseitigen zweiten Auslaufteil (3) umfangsseitig zumindest ein Einschubflügel vorsteht, der quer zur Längserstreckung des ersten Auslaufteiles (2) in den Einschubschlitz (27) bis in die Gebrauchsstellung einschiebbar ist.

7. Wasserauslauf (24) nach Anspruch 6, **dadurch gekennzeichnet, dass** der Einschubflügel als ein am zweiten Auslaufteil (3) umlaufender Ringflansch (28) ausgebildet ist.

8. Wasserauslauf (24) nach Anspruch 7, **dadurch gekennzeichnet, dass** der Ringflansch (28) am zulaufseitigen Stirnrand des zweiten Auslaufteiles 3 umfangsseitig angeordnet und vorzugsweise einstückig angeformt ist.

9. Wasserauslauf (16, 20), insbesondere sanitärer Wasserauslauf, mit einem zulaufseitigen ersten Auslaufteil (2) und einem ablaufseitigen zweiten Auslaufteil (3), die (2, 3) zwischen einer Lösestellung und einer Gebrauchsstellung bewegbar sind, in welcher Gebrauchsstellung die Auslaufteile (2, 3) in Durchströmrichtung miteinander verbunden und mittels einer Steck-/Drehverbindung aneinander lösbar fixiert sind, wobei das ablaufseitige zweite Auslaufteil (3) hülsenförmig ausgebildet ist, und wobei in den Hülseninnenraum dieses zweiten Auslaufteiles (3) eine Einsetzpatrone (5) eingesetzt ist, die einen Strahlregler und/oder einen Durchflussmengenregler und/oder ein Vorsatzsieb (7) aufweist.

10. Wasserauslauf (16, 20) nach Anspruch 9, **dadurch gekennzeichnet, dass** die Steck-/Dreh-Verbindung als Bajonett- oder Renkverbindung ausgebildet ist, und dass eines der Auslaufteile (2, 3) derart auf das andere Auslaufteil (2) aufschiebbar ist, bis ein an dem einen Auslaufteil (2) außen- oder innenumfangsseitig vorstehender Kupplungszapfen (21) oder dergleichen Kupplungsvorsprung einen an dem anderen Auslaufteil (3) vorgesehenen und quer zur Steck- oder Einschubrichtung (Pf 2) orientierten Randbereich (22) hintergreift.

11. Wasserauslauf (20) nach Anspruch 9 oder 10, wobei das eine der Auslaufteile (2, 3) derart auf das andere Auslaufteil (2) aufschiebbar ist, bis ein an einem der Auslaufteile (2, 3) vorgesehener Aufschiebeanschlag (25) die Aufschiebebewegung begrenzt.

12. Wasserauslauf (20) nach Anspruch 11, **dadurch gekennzeichnet, dass** der Aufschiebeanschlag (25) als Ringabsatz ausgebildet ist.

13. Wasserauslauf (20) nach einem der Ansprüche 9 bis 12, **dadurch gekennzeichnet, dass** an dem auf das andere Auslaufteil (2) aufschiebbaren Auslaufteil (3) wenigstens ein Betätigungselement vorgesehen ist und vorzugsweise radial vorsteht.

14. Wasserauslauf (20) nach Anspruch 13, **dadurch gekennzeichnet, dass** das wenigstens eine Betätigungselement als Betätigungsflügel (29) ausgebildet ist und dass am Auslaufteil (3) mindestens zwei, vorzugsweise in gleichmäßigen Abständen voneinander beabstandete Betätigungsflügel (29) vorstehen.

15. Wasserauslauf (1, 6, 16, 20, 24) nach einem der vorhergehenden Ansprüche, **dadurch gekennzeichnet, dass** die Einsetzpatrone (5) von der zuströmseitigen Stirnseite des ablaufseitigen zweiten Auslaufteiles (3) aus in den Hülseninnenraum dieses zweiten Auslaufteiles (3) einsetzbar ist, bis die Einsetzpatrone (5) an einem am Hülseninnenumfang des zweiten Auslaufteiles (3) vorgesehenen Einsetzanschlag anliegt.

16. Wasserauslauf (1, 6, 16, 20, 24) nach Anspruch 15, **dadurch gekennzeichnet, dass** der Einsetzanschlag als ein am Hülseninnenumfang des zweiten Auslaufteiles (3) umlaufender Ringabsatz (8) oder Ringflansch ausgebildet ist.

17. Wasserauslauf (1, 6, 16, 20, 24) nach Anspruch 15 oder 16, **dadurch gekennzeichnet, dass** die Einsetzpatrone (5) ein Patronengehäuse hat, welches an seinem Gehäuseaußenumfang einen vorzugsweise als Ringflansch oder Ringabsatz (9) ausgebildeten Gegenanschlag hat, welcher Gegenanschlag in der Gebrauchsstellung am Einsetzanschlag anliegt.

18. Pflanzenbewässerung mit einer Mehrzahl voneinander beabstandeter Wasserausläufe (1, 6, 16, 20, 24) nach einem der Ansprüche 1 bis 17.

## Claims

1. Water outlet (1, 6, 16, 20, 24), in particular a sanitary water outlet, having an inflow-side first outlet part (2) and an outflow-side second outlet part (3), which (2, 3) can be moved between a release position and a use position, in which use position the outlet parts (2, 3) are connected to one another in the direction of flow and are releasably fixed to one another by means of a quick coupling (4), wherein the outflow-side second outlet part (3) is sleeve-shaped, and wherein an insert cartridge (5), which has a jet regulator and/or a flow rate regulator and/or an attachment strainer (7), is inserted into the sleeve interior of said second outlet part (3), and wherein the quick coupling (4) is held on the first outlet part (2) on the outside and at an axial distance from the second outlet part (3), wherein an annular flange (10) or annular shoulder of the quick coupling (4) is provided on the outer circumference on the one, preferably the first, outlet part (2), and wherein at least one spring bar (11, 12) of the quick coupling (4) is provided on the other, in particular the second, outlet part (3), which spring bar (11, 12) is movable between an outwardly deflected release position and a holding position which is inwardly deflected in relation thereto, in which holding position the at least one spring bar (11, 12) engages behind the annular shoulder (10) or annular flange of the quick coupling (4) with a latching cam (13) integrally formed on its free bar end.

2. Water outlet (1, 6) according to claim 1, **characterized in that** at least two spring bars (11, 12), preferably arranged in pairs on opposite sides of this outlet part (3), are provided on one of the outlet parts (2, 3) and in particular on the second outlet part (3).

3. Water outlet (1, 6) according to claim 1 or 2, **characterized in that** the spring bars (11, 12) are connected via an elastically deformable connecting ring (19) engaging on both sides of the spring bars (11, 12), and **in that** the spring bars (11, 12) can be deflected from their holding position into the release position by applying pressure to the outside of the connecting ring (19) in at least one annular section spaced from the water outlet (6) or the line coupling.

4. Water outlet (6) according to claim 3, **characterized in that** the connecting ring (19) has an approximately oval annular shape, and **in that** the pair of spring bars (11, 12) are integrally formed on the connecting ring (19) on the mutually closest opposite partial regions of the oval annular shape.

5. Water outlet (1) according to one of claims 1 to 4, **characterized in that** the at least one spring bar (11, 12) is integrally formed on the outlet part (3) in a bar section (15) of this spring bar (11, 12) spaced apart from the two bar ends, **in that** the bar section (15) divides this spring bar (11, 12) into two bar arms (17, 18), of which a first bar arm (17) carries the latching cam (13) at its free bar end and of which a second bar arm (18) is designed as a pushbutton, and **in that** the at least one spring bar (11, 12) is elastically pivotable about a pivot axis arranged in the region between the bar section (15) and the outlet part (3) integrally formed thereon, wherein the at least one spring bar (11, 12) can be moved from the holding position into the release position by applying pressure to its pushbutton.

6. Water outlet (24) with an inflow-side first outlet part (2) and an outflow-side second outlet part (3), which parts (2, 3) can be moved between a release position and a use position, in which use position the outlet parts (2, 3) are connected to one another in the direction of flow, wherein the outflow-side second outlet part (3) is sleeve-shaped, and wherein an insert cartridge (5), which has a jet regulator and/or a flow rate regulator and/or an attachment strainer (7), is inserted into the sleeve interior of this second outlet part (3) and wherein the inflow-side first outlet part (2) has an insertion slot (27), and wherein at least one insertion wing projects on the periphery of the outflow-side second outlet part (3) and can be inserted transversely to the longitudinal extension of the first outlet part (2) into the insertion slot (27) as far as the use position.

7. Water outlet (24) according to claim 6, **characterized in that** the insertion wing is designed as an annular flange (28) running around the second outlet part (3).

8. Water outlet (24) according to claim 7, **characterized in that** the annular flange (28) is arranged circumferentially on the inflow-side end edge of the second outlet part 3 and is preferably integrally formed.

9. Water outlet (16, 20), in particular a sanitary water outlet, having an inflow-side first outlet part (2) and an outflow-side second outlet part (3), which parts (2, 3) can be moved between a release position and a use position, in which use position the outlet parts (2, 3) are connected to one another in the direction of flow and are releasably fixed to one another by means of a plug-in/rotary connection, wherein the outflow-side second outlet part (3) is sleeve-shaped, and wherein an insert cartridge (5), which has a jet regulator and/or a flow rate regulator and/or an attachment strainer (7), is inserted into the sleeve interior of this second outlet part (3).

10. Water outlet (16, 20) according to claim 9, **characterized in that** the plug-in/rotary connection is designed as a bayonet coupling or quarter-turn fastener, and **in that** one of the outlet parts (2, 3) can be pushed onto the other outlet part (2) in such a way until a coupling pin (21) or similar coupling projection projecting on the outer or inner circumference of one outlet part (2) engages behind an edge region (22) provided on the other outlet part (3) and oriented transversely to the plug-in or insertion direction (Pf 2).

11. Water outlet (20) according to claim 9 or 10, wherein the one of the outlet parts (2, 3) can be pushed onto the other outlet part (2) in such a way until a push-on stop (25) provided on one of the outlet parts (2, 3) limits the push-on movement.

12. Water outlet (20) according to claim 11, **characterized in that** the push-on stop (25) is designed as an annular shoulder.

13. Water outlet (20) according to one of claims 9 to 12, **characterized in that** at least one actuating element is provided on the outlet part (3) that can be pushed onto the other outlet part (2) and preferably projects radially.

14. Water outlet (20) according to claim 13, **characterized in that** the at least one actuating element is designed as an actuating wing (29) and **in that** at least two actuating wings (29) project from the outlet part (3), preferably at equal distances from one another.

15. Water outlet (1, 6, 16, 20, 24) according to one of the preceding claims, **characterized in that** the insertion cartridge (5) can be inserted into the sleeve interior of the second outlet part (3) from the inflow-side end face of the outflow-side second outlet part (3) until the insertion cartridge (5) rests against an insertion stop provided on the sleeve inner circumference of the second outlet part (3).

16. Water outlet (1, 6, 16, 20, 24) according to claim 15, **characterized in that** the insertion stop is designed as an annular shoulder (8) or annular flange extending around the inner circumference of the sleeve of the second outlet part (3).

17. Water outlet (1, 6, 16, 20, 24) according to claim 15 or 16, **characterized in that** the insertion cartridge (5) has a cartridge housing which, on its outer housing circumference, has a counterstop preferably designed as an annular flange or annular shoulder (9), which counterstop rests against the insertion stop in the use position.

18. Plant irrigation system having a plurality of spaced-apart water outlets (1, 6, 16, 20, 24) according to one of claims 1 to 17.

## Revendications

1. Départ d'eau (1, 6, 16, 20, 24), en particulier pour sanitaires, avec une première partie de départ (2) du côté de l'arrivée et une deuxième partie de départ (3) du côté de la sortie, lesquelles (2, 3) peuvent être déplacées entre une position de libération et une position d'utilisation dans lequel les parties de départ (2, 3) sont assemblées l'une à l'autre dans le sens de l'écoulement et fixées l'une à l'autre d'une façon pouvant être défaite au moyen d'un coupleur rapide (4), dans lequel la deuxième partie de départ (3) du côté de la sortie est en forme de manchon et
dans lequel un insert de cartouche (5), comportant un régulateur de jet et/ou un régulateur de débit et/ou un filtre d'entrée (7), est inséré dans l'intérieur du manchon de cette deuxième partie de départ (3), et dans lequel le coupleur rapide (4) est retenu sur l'extérieur et à distance dans le sens axial de la deuxième partie de départ (3) sur la première partie de départ (2),
dans lequel une bride annulaire (10) ou un épaulement annulaire du coupleur rapide (4) est prévue sur une partie de départ, de préférence la première partie de départ (2), sur la circonférence extérieure,
dans lequel au moins une barrette de ressort (11, 12) du coupleur rapide (4) est prévue sur une autre partie de départ, de préférence la deuxième partie de départ (3), laquelle barrette de ressort (11, 12) est mobile entre une position de libération détendue et une position de maintien comprimée par rapport à celle-ci, dans lequel position de maintien l'au moins une barrette de ressort (11, 12) passe derrière l'épaulement annulaire (10) ou la bride annulaire du coupleur rapide (4) avec un bec d'enclenchement (13) formé à l'extrémité libre de la barrette.

2. Départ d'eau (1, 6) selon la revendication 1, **caractérisé en ce que** sont prévues sur l'une des parties de départ (2, 3) et en particulier sur la deuxième partie de départ (3) au moins deux barrettes de ressort (11, 12), de préférence disposées par paires sur des faces opposées de cette partie de départ (3).

3. Départ d'eau (1, 6) selon la revendication 1 ou 2, **caractérisé en ce que** les barrettes de ressort (11, 12) sont reliées par un anneau de liaison (19) déjà en prise sur les barrettes de ressort (11, 12) et déformable de façon élastique, et **en ce que** les barrettes de ressort (11, 12) peuvent être détendues de leur position de maintien à leur position de libération par l'application externe d'une pression sur l'anneau de liaison (19) dans au moins un segment de l'anneau éloigné du départ d'eau (6) ou du raccord de conduite.

4. Départ d'eau (6) selon la revendication 3, **caractérisé en ce que** l'anneau de liaison (19) a une forme approximativement ovale et **en ce que** la paire de barrettes de ressort (11, 12) est formée sur les zones se faisant face les plus proches de la forme annulaire ovale sur l'anneau de liaison (19).

5. Départ d'eau (1) selon l'une des revendications 1 à 4, **caractérisé en ce que** l'au moins une barrette de ressort (11, 12) est formée sur la partie de départ (3) dans un segment de barrette (15) de cette barrette de ressort (11, 12) éloigné des deux extrémités de la barrette, **en ce que** le segment de barrette (15) divise cette barrette de ressort (11, 12) en deux bras de barrette (17, 18), dont un premier bras de barrette (17) porte le bec d'enclenchement (13) à son extrémité libre et un deuxième bras de barrette (18) est conçu comme un bouton-poussoir, et **en ce que** l'au moins une barrette de ressort (11, 12) est ainsi capable de pivoter de façon élastique autour d'un axe de pivotement disposé dans la zone comprise entre le segment de barrette (15) et la partie de départ (3) formée dessus, l'au moins une barrette de ressort (11, 12) pouvant être amenée de la position de maintien à la position de libération par l'application d'une pression sur son bouton-poussoir.

6. Départ d'eau (24) avec une première partie de départ (2) du côté de l'arrivée et une deuxième partie de départ (3) du côté de la sortie, lesquelles (2, 3) peuvent être déplacées entre une position de libération et une position d'utilisation dans lequel les parties de départ (2, 3) sont assemblées l'une à l'autre dans le sens de l'écoulement, dans lequel la deuxième partie de départ (3) du côté de la sortie sont en forme de manchon et
dans lequel un insert de cartouche (5), comportant un régulateur de jet et/ou un régulateur de débit et/ou un filtre d'entrée (7), est inséré dans l'intérieur du manchon de cette deuxième partie de départ (3), et dans lequel la première partie de départ (2) du côté de l'arrivée comporte une fente d'emboîtement (27),
et dans lequel au moins une ailette d'emboîtement dépasse sur la circonférence de la deuxième partie de départ (3) du côté de la sortie et peut être insérée transversalement par rapport au sens de la longueur de la partie de départ (2) dans la fente d'emboîtement (27) jusqu'à la position d'utilisation.

7. Départ d'eau (24) selon la revendication 6, **caractérisé en ce que** l'ailette d'emboîtement est conformée comme une bride annulaire (28) faisant le tour de la deuxième partie de départ (3).

8. Départ d'eau (24) selon la revendication 7, **caractérisé en ce que** la bride annulaire (28) est disposée sur la circonférence sur le bord d'extrémité du côté de l'arrivée de la deuxième partie de départ (3) et formée dessus, de préférence, d'un seul tenant.

9. Départ d'eau (16, 20), en particulier pour sanitaires, avec une première partie de départ (2) du côté de l'arrivée et une deuxième partie de départ (3) du côté de la sortie, lesquelles (2, 3) peuvent être déplacées entre une position de libération et une position d'utilisation dans lequel les parties de départ (2, 3) sont assemblées l'une à l'autre dans le sens de l'écoulement et fixées l'une à l'autre d'une façon pouvant être défaite au moyen d'un assemblage emboîté rotatif, dans lequel la deuxième partie de départ (3) du côté de la sortie est en forme de manchon et dans lequel un insert de cartouche (5), comportant un régulateur de jet et/ou un régulateur de débit et/ou un filtre d'entrée (7), est inséré dans l'intérieur du manchon de cette deuxième partie de départ (3).

10. Départ d'eau (16, 20) selon la revendication 9, **caractérisé en ce que** l'assemblage emboîté-rotatif est conformé comme un assemblage à baïonnette et **en ce que** l'une des parties de départ (2, 3) peut être emboîtée par-dessus l'autre partie de départ (2) jusqu'à ce qu'un goujon d'accouplement (21) ou une saillie d'accouplement similaire dépassant sur la face extérieure ou intérieure d'une partie de départ (2) passe derrière une zone de bord (22) prévue sur l'autre partie de départ (3) et orientée transversalement par rapport à la direction d'emboîtement ou d'insertion (fl. 2).

11. Départ d'eau (20) selon la revendication 9 ou 10, **caractérisé en ce que** l'une des parties de départ (2, 3) peut être emboîtée par-dessus l'autre partie de départ (2) jusqu'à ce qu'une butée d'emboîtement (25) prévue sur l'une des parties de départ (2, 3) limite le mouvement d'emboîtement.

12. Départ d'eau (20) selon la revendication 11, **caractérisé en ce que** la butée d'emboîtement (25) est conçue comme un épaulement annulaire.

13. Départ d'eau (20) selon l'une des revendications 9 à 12, **caractérisé en ce qu'**au moins un élément d'actionnement est prévu sur la partie de départ (3) pouvant être emboîtée sur l'autre partie de départ (2) et dépasse de préférence dans le sens radial.

14. Départ d'eau (20) selon la revendication 13, **caractérisé en ce que** l'au moins un élément d'actionnement est conçu comme une ailette d'actionnement (29) et **en ce qu'**au moins deux ailettes d'actionnement (29), de préférence écartées à égale distance les unes des autres, sont prévues sur la partie de départ (3).

15. Départ d'eau (1, 6, 16, 20, 24) selon l'une des revendications précédentes, **caractérisé en ce que** l'insert de cartouche (5) peut être inséré dans l'espace intérieur de la deuxième partie de départ (3) du côté de la sortie par la face d'extrémité du côté de l'arrivée de cette deuxième partie de départ (3), jusqu'à ce que l'insert de cartouche (5) repose sur une butée d'insertion prévue sur la circonférence intérieure du manchon de la deuxième partie de départ (3).

16. Départ d'eau (1, 6, 16, 20, 24) selon la revendication 15, **caractérisé en ce que** la butée d'insertion est conçue comme un épaulement annulaire (8) ou une bride annulaire faisant le tour de la circonférence intérieure du manchon de la deuxième partie de départ (3).

17. Départ d'eau (1, 6, 16, 20, 24) selon la revendication 15 ou 16, **caractérisé en ce que** l'insert de cartouche (5) possède un corps de cartouche qui possède sur sa circonférence extérieure de corps une contre-butée conçue de préférence comme une bride annulaire ou un épaulement annulaire (9), laquelle contre-butée repose contre la butée d'insertion dans la position d'utilisation.

18. Dispositif d'arrosage de plantes comportant plusieurs départs d'eau (1, 6, 16, 20, 24) selon l'une des revendications 1 à 17 écartés les uns des autres.
